# EUROPÄISCHE PATENTSCHRIFT

(11) **EP 1 982 777 B1**
(45) Veröffentlichungstag und Bekanntmachung des Hinweises auf die Patenterteilung: **06.01.2010**
(21) Anmeldenummer: 08006850.5
(22) Anmeldetag: 04.04.2008
(51) Int. Cl.: B21C 37/08, B23K 26/26

(54) **Durchlaufschweissmaschine zum Verschweissen eines Rohrrohlings**
Cyclic welding machine for welding a tubular blank
Machine à souder en continu destinée à souder une ébauche de tuyau

(30) Priorität: 17.04.2007 DE 102007018387
(43) Veröffentlichungstag der Anmeldung: 22.10.2008
(73) Patentinhaber: Weil Engineering GmbH, 79379 Müllheim (DE)
(72) Erfinder: Weil, Wolfgang, 79379 Müllheim (DE)
(74) Vertreter: Maucher, Wolfgang

(56) Entgegenhaltungen:
- EP-A- 0 092 519
- EP-A- 0 215 404
- EP-A- 0 277 534
- US-A- 4 272 004
- US-A- 4 577 088

## Beschreibung

Die Erfindung betrifft eine Durchlaufschweißmaschine zum Verschweißen einander zugewandter Seiten eines aus einem Materialzuschnitt gebogenen Rohrrohlings mit einem Führungsschwert zur Führung der miteinander zu verschweißenden Seiten des Rohrrohlings in Richtung zu einer Schweißeinrichtung, sowie mit über den Umfang der für den Rohrrohling bestimmten Führungsbahn angeordneten Rohrführungen, wobei die den zu verschweißenden Seiten des Rohrrohlings zugeordneten und auf gegenüberliegenden Seiten des Führungsschwertes angeordneten Führungsbahnen des Führungsschwertes winklig zueinander in einer durch die Führungsachse verlaufenden Ebene angeordnet sind.

Kaminrohre werden häufig aus Rohrabschnitten hergestellt, die jeweils aus einem äußeren Rohrmantel und einem inneren Rohrmantel bestehen, wobei zwischen dem äußeren Rohrmantel und dem inneren Rohrmantel jedes Rohrabschnitts eine Isolierung vorgesehen ist.

Um die für den äußeren Rohrmantel und den inneren Rohrmantel benötigten Rohrsegmente herzustellen, sind bereits verschiedene Herstellungsverfahren vorbekannt; so können die in unterschiedlichen Durchmessern benötigten Rohrsegmente auf verschiedenen Fertigungsstraßen hergestellt werden, um sie anschließend in einer Endmontage zu den einzelnen Kaminrohrabschnitten zusammenzufügen.

Dabei werden u.a. auch Durchlaufschweißmaschinen der eingangs erwähnten Art verwendet, um die einander zugewandten Seiten eines aus einem Materialzuschnitt gebogenen Rohrrohlings stumpf miteinander verschweißen zu können. Bei diesen vorbekannten Durchlaufschweißmaschinen ist im Spalt des Rohrrohlings ein Führungsschwert vorgesehen, um die miteinander zu verschweißenden Seiten des Rohrrohlings in auf den gegenüberliegenden Seiten des Führungsschwertes angeordneten Führungsbahnen zu einer Schweißeinrichtung führen zu können. Da das Führungsschwert aus Stabilitätsgründen eine gewisse Mindestdicke aufweisen muss, werden die zur Erzeugung einer Stumpfnaht aneinander geführten Kanten des Rohrrohlings derart schräg zueinander vorgeschoben, dass diese in etwa gleichem Abstand zu Führungsachse angeordneten Kanten zunächst vom Führungsschwert auf Abstand gehalten werden, um sich lediglich in dem vor dem Schwert angeordneten Schweißpunkt zu berühren. Diese, auf einem gemeinsamen Umfangsmantel zunächst beabstandete, dann aber aneinander stoßende und somit letztlich winklige Führung der miteinander zu verschweißenden Kanten des Rohrrohlings macht es erforderlich, dass der Rohrrohling mit erheblichen Kraftaufwand eingespannt werden muss, um die winklig zueinander angeordneten Kanten des Rohrrohlings im Schweißpunkt aneinander pressen zu können. Bei diesen vorbekannten Schweißmaschinen werden daher Rohrführungen benötigt, die in der Lage sind, die miteinander zu verschweißenden und zunächst noch durch das Führungsschwert aufgespreizten Kanten des Rohrrohlings mit erheblichem Kraftaufwand an der Schweißstelle zusammenpressen zu können. Vorbekannte Schweißmaschinen haben dazu spezielle, über Andruckrollen anpressbare Spannbacken, die an die gewünschte Form des Rohrsegments anzupassen sind. Das Anpassen der vorbekannten Schweißmaschinen an einen bestimmten Rohrdurchmesser des benötigten Rohrrohlings ist jedoch mit einem erheblichen Umrüstaufwand verbunden.

Sofern die Herstellungsmöglichkeiten auf nur eine Fertigungsstrasse beschränkt sind, müssen zunächst eine Anzahl von Rohrsegmenten mit dem einen Durchmesser hergestellt und vorrübergehend zwischengelagert werden, um anschließend eine entsprechende Anzahl von Rohrsegmenten mit dem anderen benötigten Durchmesser zu fertigen. Dabei sind die zum Formen und Schweißen der benötigten Rohrsegmente erforderlichen Maschinen zunächst auf den jeweils anderen Rohrdurchmesser umzubauen, bevor darauf Rohrsegmente eines solchen Rohrdurchmesser hergestellt werden können.

Die Herstellung von Rohrsegmenten insbesondere in gegebenenfalls auch rasch wechselnden Durchmessern erfordert daher einen erheblichen Zeit- und Platzbedarf. Man hat daher auch bereits eine Durchlaufschweißmaschine geschaffen, die zum Verschweißen von vorgeformten Rohlingen zu Rohren dient (WO 00/29163). Die vorbekannte Schweißmaschine ist modular aufgebaut und hat eine beispielsweise als Schiene ausgebildete Tragvorrichtung, auf der mehrere Module angeordnet sind. Dabei wird der vorgeformte Rohling zunächst in ein Einlaufmodul eingeführt, von wo der Rohling zu Vorzentriermodulen weiterbefördert werden kann. In jedem dieser Vorzentriermodule sind Beaufschlagungswerkzeuge für den Rohling vorgesehen, welche zu dessen Zentrierung und Formgebung vor dem Schweißmodul dienen. Um nun die verschiedensten Rohrdimensionen und Rohrformen auf einfache Weise ohne aufwendige Umrüstung der Schweißmaschine zur Schweißung bringen zu können, ist bei der aus WO 00/29163 vorbekannten Schweißmaschine vorgesehen, dass entlang der Länge des Rohlings die gegebenenfalls auch miteinander koppelbaren Module auf der gemeinsamen Trägereinheit aus einer Arbeitsposition in eine Warteposition und zurück verfahrbar sind.

Da die vorbekannte Schweißmaschine modular aufgebaut ist, und die einzelnen Module auswechselbar und zueinander verstellbar auf einem Träger angeordnet sind, soll sich eine optimale Anpassung an die jeweilige zu schweißende Rohrform und Rohrdimensionen ergeben. So ist in der WO 00/29163 auch vorgesehen, dass je nach Länge des Rohres mehrere Einlaufmodule und Vorpositionierungsmodule vorhanden sein beziehungsweise solche Module je nach Durchmesserbereich des Rohres rasch gegen angepasste Module ausgetauscht werden können. Durch den Austausch des Zentrier- und Schweißmodules sollen auch verschiedene Schweißmittel auf einfache Weise verwendet werden können. Dabei sind die Module auf der Trägereinheit so verschiebbar, dass sie in eine inaktive Warteposition bringbar sind, in der sie den Arbeitsvorgang der aktiven Module nicht stören und aus der sie einfach erneut in die Arbeitsposition bringbar sind.

Bei der aus WO 00/29163 vorbekannten Durchlaufschweißmaschine werden die in den einzelnen Modulen vorgesehenen Beaufschlagungswerkzeuge also praktisch als Wechselwerkzeuge in der Schweißmaschine bevorratet und je nach Bedarf aktiviert.

In der WO 00/29163 ist beschrieben, dass die vorbekannte Durchlaufschweißmaschine auch ein als Führungsschwert zu bezeichnendes Richtwerkzeug hat, das in den noch geöffneten Rohling derart eintaucht, dass die Kanten des Rohlings an den aufeinanderzulaufenden Kanten dieses Richtwerkzeuges anliegen. Dieses Richtwerkzeug, das nach oben weggezogen wird, wenn die Kanten des Rohlings durch die Beaufschlagungswerkzeuge aufeinander zu bewegt werden, soll eine definierte Lage der Kanten bewirken, so dass sich eine ebene Stumpflage der Kanten des Rohlings ausbildet.

Die aus WO 00/29163 vorbekannte Durchlaufschweißmaschine stellt somit nur eine Fortentwicklung des bisherigen Standes der Technik dar, der zur Anpassung an unterschiedliche Rohrdurchmesser verschiedene Beaufschlagungswerkzeuge vorsieht, wobei diese Beaufschlagungswerkzeuge in der WO 00/29163 zur Verkürzung beziehungsweise zur vermeldung von Umrüstzeiten in der Schweißmaschine selbst bereitgehalten werden.

Zwar ist in der WO 00/29163 auch eine Verfahrbarkeit des Führungsschwertes vorgesehen, jedoch soll das Führungsschwert nur dann hochgezogen werden, wenn die Kanten des Rohlings durch die Beaufschlagungswerkzeuge aufeinanderzu zu bewegen sind.

Aus der US-A-4 272 004 ist bereits eine Durchlaufschweißmaschine zum Verschweißen der einander zugewandten Seiten eines aus einem Materialzuschnitt gebogenen Rohrrohlings bekannt. Um die miteinander zu verschweißenden Seiten des Rohrrohlings spätestens im Bereich der Schweißmaschine derart zusammenführen zu können, dass sie durch eine Schweißnaht verbunden werden können, ist ein Führungsschwert vorgesehen, dessen den zu verschweißenden Seiten des Rohrrohlings zugeordneten und auf gegenüberliegenden Seiten des Führungsschwertes angeordneten Führungsbahnen winklig zueinander in einer durch eine Führungsachse verlaufenden Ebene angeordnet sind. Die Führungsbahnen des in der vorbekannten Durchlaufschweißmaschine verwendeten Führungsschwertes beginnen also in voneinander unterschiedlichem radialen Abstand zur Führungsachse, um sich in einer durch die Führungsachse verlaufenden Ebene zunehmend derart anzunähern, dass die in den Führungsbahnen geführten und miteinander zu verschweißenden Seiten oder Kanten der Rohrrohlinge etwa im Schweißpunkt oder im Schweißbereich der Schweißeinrichtung aneinander stoßen. Dabei sind über den Umfang der für den Rohrrohling bestimmten Führungsbahn Rohrführungen vorgesehen, welche die Zufuhr des Rohrrohlings in Richtung zur Schweißmaschine sicherstellen.

Die aus US-A-4 272 004 vorbekannte Durchlaufschweißmaschine ist zur Herstellung eines im Durchmesser festgelegten Rohrrohlings aus einem in seiner Materialdicke vorbestimmten Materialzuschnitts ausgerüstet. Eine Änderung des gewünschten Rohrdurchmessers oder der Materialdicke des verwendeten Materials ist nicht -, zumindest aber nicht ohne längere Umrüstzeiten möglich.

Vergleichbare Maschinen kennt man auch aus der EP-A1-0 215 404 und der EP-A1-0 277 534.

Auch aus der EP-A2-0 092 519 kennt man bereits eine Durchlaufschweißmaschine, die zum kontinuierlichen Formen und Verschweißen von Rohrsegmenten aus einem Materialzuschnitt bestimmt ist. Der vorbekannten Durchlaufschweißmaschine ist dazu eine Verformungseinrichtung zum Umbiegen des Materialzuschnitts in einen rund gebogenen Rohrrohling, eine Übergabeeinrichtung zur Übergabe der Rohrrohlinge von der Verformungseinrichtung in Richtung zur Schweißeinrichtung sowie ein Zusatzförderer vorgeschaltet, welcher Zusatzförderer die Rohrrohlinge mit ihren zu verschweißenden Seiten unterhalb der Schweißeinrichtung verfährt. Um die beispielsweise zur Herstellung von Dosen benötigten Rohrsegmente auch in unterschiedlichen Durchmessern und Längen herstellen zu können, sind entlang des Förderweges verstellbare Rohrführungen vorgesehen. Auch bei dieser vorbekannten Durchlaufschweißmaschine erfordert die Anpassung der Maschine an einen anderen gewünschten Rohrdurchmesser einen gewissen Aufwand.

Es besteht daher die Aufgabe, eine Durchlaufschweißmaschine der eingangs erwähnten Art zu schaffen, mit der sich Rohrsegmente im Durchlaufschweißverfahren aus entsprechenden Rohrrohlingen durch Stumpfverschweißen benachbarter Seiten oder Kanten entsprechender Rohrrohlinge auch in unterschiedlichen Durchmessern ohne lange Werkzeugumbauzeiten und sonstigen Nebenzeiten herstellen lassen.

Die erfindungsgemäße Lösung dieser Aufgabe besteht insbesondere darin, dass die Rohrführungen und das Führungsschwert zum Anpassen an unterschiedliche Rohrdurchmesser in radialer Richtung relativ zu einer Führungsachse hin verstellbar sind, dass jeder Führungsbahn des Führungsschwertes im Bereich der Schweißeinrichtung jeweils zumindest ein Niederhalter zum Niederhalten der in der Führungsbahn geführten Seite des Rohrrohlings zugeordnet ist, und dass die Niederhalter zum Anpassen an die Materialstärke des Rohrrohlings in ihrem Abstand zur zugeordneten Führungsbahn verstellbar sind.

Bei der erfindungsgemäßen Durchlaufschweißmaschine sind die Rohrführungen und das Führungsschwert zum Anpassen an unterschiedliche Rohrdurchmesser in radialer Richtung relativ zu einer Führungsachse hin verstellbar. Zwar sind die in ihrer Anzahl festgelegten Rohrführungen bei kleineren Rohrdurchmessern ausreichend dicht um den Rohrumfang herum angeordnet, um den Rohrrohling gegebenenfalls auch allseits mit hohem Druck beaufschlagen zu können, - bei größeren Rohrdurchmessern nimmt der Abstand der Rohrführungen in Umfangsrichtung aber derart zu, dass die Abstände zwischen den Rohrführungen zu groß werden, um den Rohrrohling im Bereich der Schweißstelle mit hohem Kraftaufwand zusammenfügen zu können. Die erfindungsgemäße Durchlaufschweißmaschine weist daher ein Führungsschwert auf, bei dem die den zu verschweißenden Kanten des Rohrrohlings zugeordneten und auf gegenüberliegenden Seiten des Führungsschwertes angeordneten Führungsbahnen des Führungsschwertes winklig zueinander in einer durch die Führungsachse verlaufenden Ebene angeordnet sind. Diese Führungsbahnen beginnen also in von einander unterschiedlichem radialem Abstand zur Führungsachse, um sich in einer durch die Führungsachse verlaufenden Ebene zunehmend derart anzunähern, dass die in den Führungsbahnen geführten und miteinander zu verschweißenden Seiten oder kanten der Rohrrohlinge etwa im Schweißpunkt oder im Schweißbereich der Schweißeinrichtung aneinander stoßen. Es hat sich gezeigt, dass sich die Rohrrohlinge mit dem erfindungsgemäß vorgesehen Führungsschwert ohne größere Druckbeaufschlagung stumpf verschweißen lassen, wenn die zu verschweißenden Kanten oder Seiten dieser Rohrrohlinge mit einem gleichbleibend geringen axialen Abstand, aber aus unterschiedlichen radialen Abständen zur Führungsachse aneinander herangeführt werden.

Um die miteinander zu verbindenden Kanten des Rohrrohlings stumpf miteinander verschweißen zu können und um diese Kanten im Bereich der Schweißstelle etwa in gleichem Abstand zur Führungsachse halten zu können, ist erfindungsgemäß vorgesehen, dass jeder Führungsbahn des Führungsschwertes im Bereich der Schweißeinrichtung jeweils zumindest ein Niederhalter zum Niederhalten der in der Führungsbahn geführten Seite des Rohrrohlings zugeordnet ist. Da diese Niederhalter zum Anpassen an die Materialstärke des Rohrrohlings in ihrem Abstand zur zugeordneten Führungsbahn des Führungsschwertes verstellbar sind, können in der erfindungsgemäßen Durchlaufschweißmaschine Rohrsegmente auch in unterschiedlichen Durchmessern oder aus Materialdicke ohne größere Umrüstzeiten auf einfache Weise herstellbar.

Besonders vorteilhaft ist es, wenn die Schweißeinrichtung eine Längsnahtschweißeinrichtung ist, die beispielsweise eine Schweißoptik oder einen Schweißbrenner aufweisen kann.

Eine besonderes vorteilhafte Ausführungsform gemäß der Erfindung sieht vor, dass zumindest ein Niederhalter als ein den Rohrrohling beaufschlagendes und vorzugsweise drehbar gelagertes Niederhalterrad ausgestaltet ist. Ein solches Niederhalterrad kann beim Vorschub des Rohrrohlings mitdrehen, ohne in seiner Niederhaltertunktion nachlassen zu mussen.

Um die im Bereich der Schweißstelle erzeugte Wärmeenergie möglichst rasch vom Rohrrohling abtragen zu können, ist es vorteilhaft, wenn das Niederhalterrad aus einem wärmeleitendem Material und insbesondere aus Kupfer hergestellt ist.

Der Rohrrohling lässt sich in der erfindungsgemäßen Durchlaufschweißmaschine praktisch über die gesamte Wegstrecke lagegerecht positionieren, wenn die Rohrführungen als Führungsleisten ausgestaltet sind. Da diese Rohrführungen den Rohrrohling lediglich in Schieberichtung führen und nicht zusätzlich auch druckbeaufschlagen müssen, kann es vorteilhaft sein, wenn die als Rohrführungen vorgesehenen Führungsleisten einen den Rohrrohling beaufschlagenden Borstenbesatz aufweisen. In den mit einem Borstenbesatz ausgestatteten Rohrführungen wird der Rohrrohling ohne unerwünscht großes axiales Spiel geführt.

Dabei sieht eine bevorzugte Ausführungsform gemäß der Erfindung vor, dass zum Vorschub des Rohrrohlings entlang der Rohrführungen in axialer Richtung verfahrbare Schieber vorgesehen sind. Dabei lässt sich der konstruktive Aufwand reduzieren, wenn jeder Schieber vorzugsweise in eine Rohrführung integriert ist.

Eine bevorzugte Weiterbildung gemäß der Erfindung sieht vor, dass die Rohrführungen und das Führungsschwert mittels einer Steuereinrichtung verstellbar und an den Durchmesser des jeweils zu verschweißenden Rohrrohlings anpassbar sind. Die bei dieser Ausführungsform der erfindungsgemäßen Durchlaufschweißmaschine vorgesehene Steuereinrichtung erlaubt es, auch wechselweise Rohrsegmente mit unterschiedlichen Durchmessern herzustellen.

Dabei ist es besonders vorteilhaft, wenn der Durchlaufschweißmaschine zum Formen der benötigten Rohrrohlinge aus vorgefertigten Materialzuschnitten zumindest eine Rundbiegemaschine vorgeschaltet ist.

Weitere Ausführungen gemäß der Erfindung ergeben sich aus den Ansprüchen in Verbindung mit den Zeichnungen sowie der Beschreibung. Nachstehend wir ein bevorzugtes Ausführungsbeispiel gemäß der Erfindung anhand der Zeichnung noch näher erläutert.

Es zeigt:
- Fig. 1: eine Durchlaufschweißmaschine zum Verschweißen einander zugewandter Seiten eines aus einem Materialzuschnitt gebogenen Rohrrohlings, wobei die Durchlaufschweißmaschine ein Führungsschwert zur Führung der miteinander zu verschweißenden Seiten des Rohrrohlings sowie auf gegenüberliegenden Seiten des Rohrrohlings angeordnete Rohrführungen hat,
- Fig. 2: das Führungsschwert der in Fig. 1 gezeigten Durchlaufschweißmaschine in einer perspektivischen Einzelteil-Darstellung und
- Fig. 3: die Durchlaufschweißmaschine aus Fig. 1 und 2 im Bereich zwischen Führungsschwert und Schweißeinrichtung.

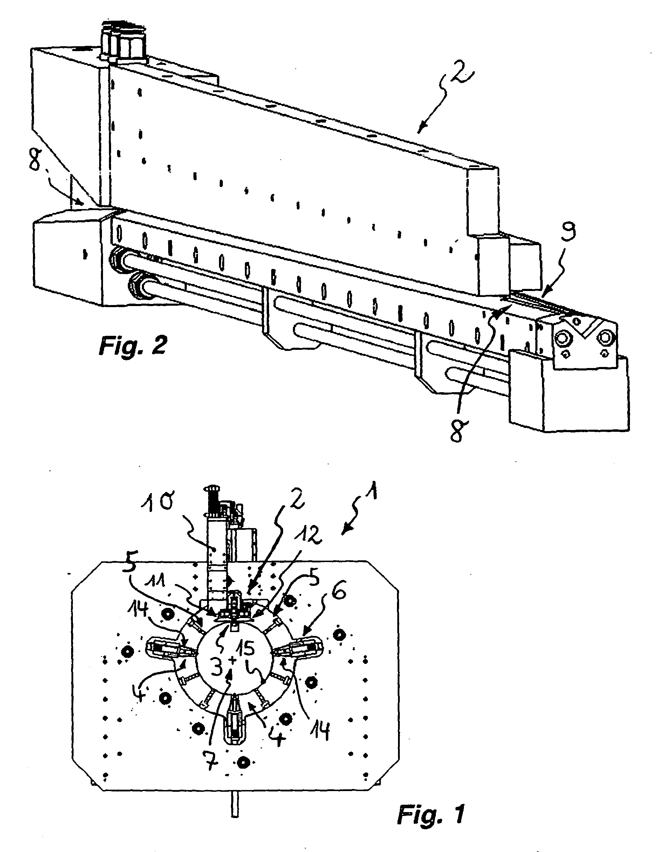

In Fig. 1 ist eine Durchlaufschweißmaschine 1 gezeigt, die zum Stumpfverschweißen einander zugewandter Seiten eines aus einem Materialzuschnitt gebogenen Rohrrohlings 15 bestimmt ist. Die Durchlaufschweißmaschine 1 weist ein in Fig. 1 etwa senkrecht zur Zeichenebene orientiertes und in Fig. 2 noch näher dargestelltes Führungsschwert 2 auf, das zur Führung der miteinander zu verschweißenden Seiten des Rohrrohlings 15 in Richtung zu einer Schweißeinrichtung 3 dient. Aus Fig. 1 wird deutlich, dass die Durchlaufschweißmaschine 1 Rohrführungen 4 und 5 hat, die über den Umfang der für den Rohrrohling 15 bestimmten Führungsbahn verteilt sind.

Um in der Durchlaufschweißmaschine 1 auch wechselweise Rohrrohlinge 15 mit unterschiedlichen Rohrdurchmessern verschweißen zu können, sind die Rohrführungen 4 und 5 und das Führungsschwert 2 in radialer Richtung relativ zu einer Führungsachse 7 hin verstellbar und auf diese Weise an die verschiedenen Rohrdurchmesser anpassbar. Anhand von Fig. 1 wird deutlich, dass die Rohrführungen 4 und 5 bei kleinen Rohrdurchmessern in Umfangsrichtung mit einem vergleichsweise geringen Abstand voneinander um den Rohrrohling 15 herum angeordnet sind, während dieser Abstand der Rohrführungen 4 und 5 zueinander mit zunehmendem Rohrdurchmesser zunimmt und bei großen Rohrdurchmessern derart groß bemessen ist, dass die Rohrführungen 4 und 5 die miteinander zu verschweißenden Kanten oder Seiten des Rohrrohlings 15 nicht zusammenpressen können, sondern den Rohrrohling 15 ausschließlich in Längsrichtung führen.

In Fig. 2 ist erkennbar, dass die den zu verschweißenden Seiten des Rohrrohlings 15 zugeordneten und auf gegenüberliegenden Seiten des Führungsschwertes 2 angeordneten Führungsbahnen 8, 9 des Führungsschwertes 2 winklig zueinander in einer etwa durch die Führungsachse 7 verlaufenden Ebene angeordnet sind. Dabei definiert die Führungsachse die koaxiale Längsachse der in der Durchlaufschweißmaschine 1 herzustellende Rohre.

Die am freien Schwertende des Führungsschwertes 2 angeordnete Schweißeinrichtung 3 ist als Längsnahtschweißeinrichtung ausgestaltet, die einen Schweißbrenner oder eine beispielsweise als Laser ausgebildete Schweißoptik aufweisen kann. Auch die Schweißachse 10 dieser Schweißeinrichtung 3 ist in radialer Richtung zum Führungsschwert 2 und somit letztlich zur Führungsachse 7 zustellbar.

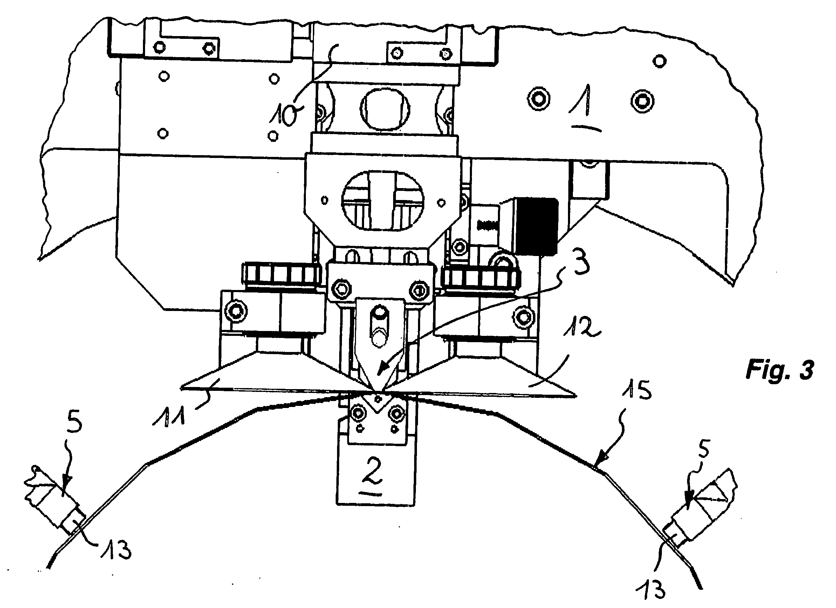

Aus einem Vergleich der Fig. 2 und 3 wird deutlich, dass jeder Führungsbahn 8, 9 des Führungsschwertes 2 im Bereich der Schweißeinrichtung 3 jeweils ein als Andruckrädchen oder als Niederhalterrad ausgebildeter Niederhalter 11, 12 zugeordnet ist, welche die entsprechende Kante des Rohrrohlings 15 auf die jeweilige Führungsbahn 8, 9 des Führungsschwertes 2 niederdrücken. Diese Niederhalterräder 11, 12, die hier etwa tangential zur Außenoberfläche des Rohrrohlings 15 angeordnet sind, aber auch winklig dazu oder radial zur Führungsachse 7 orientiert sein können, sind aus wärmeleitendem Material und insbesondere aus Kupfer hergestellt, um die im Schweißbereich entstehende Wärme vom Rohrrohling 15 abtragen zu können.

Die Niederhalterräder 11, 12 sind zum Anpressen an die Materialstärke des Rohrrohlings 15 in ihrem Abstand zur zugeordneten Führungsbahn verstellbar.

Aus einem Vergleich der Fig. 1 und 3 wird erkennbar, dass die Rohrführungen 4 und 5 als in axialer Richtung des Rohrrohlings 15 orientierte Führungsleisten ausgestaltet sind, die einen den Rohrrohling 15 beaufschlagenden Borstenbesatz 13 tragen. In die Rohrführungen 4 sind Schieber 14 integriert, die zum Verschieben des Rohrrohlings 15 achsparallel zur Führungsachse verschiebbar oder verfahrbar sind.

Die Rohrführungen 4 und 5 und das Führungsschwert 2 sind mittels einer Steuereinrichtung verstellbar und an den Durchmesser des jeweils zu verschweißenden Rohres anpassbar. Die hier dargestellte Durchlaufschweißmaschine 1 ist Bestandteil eines Rohr-Produktionscenters, das auch eine der Durchlaufschweißmaschine 1 vorgeschaltete Rundbiegemaschine umfasst, die zum Formen der benötigten Rohrrohlinge 15 aus vorgefertigten Materialzuschnitten bestimmt ist. In einem solchen Rohr-Produktionscenter lassen sich wahlweise Rohre mit unterschiedlichem Rohrdurchmesser im Wechsel herstellen. Innerhalb dieses Rohr-Produktionscenters wird der gerundete Rohling in die von der Durchlaufschweißmaschine 1 gebildete Schweißstation geschoben, um dort automatisch gespannt und nach dem Stumpfschweißen automatisch aus der Maschine ausgeschoben zu werden.

## Patentansprüche

1. Durchlaufschweißmaschine (1) zum Verschweißen einander zugewandter Seiten eines aus einem Materialzuschnitt gebogenen Rohrrohlings (15), mit einem Führungsschwert (2) zur Führung der miteinander zu verschweißenden Seiten des Rohrrohlings (15) in Richtung zu einer Schweißeinrichtung (3) sowie mit über den Umfang der für den Rohrrohling (15) bestimmten Führungsbahn angeordneten Rohrführungen (4, 5), wobei die den zu verschweißenden Seiten des Rohrrohlings (15) zugeordneten und auf gegenüberliegenden Seiten des Führungsschwertes (2) angeordneten Führungsbahnen (8, 9) des Führungsschwertes (2) winklig zueinander in einer durch eine Führungsachse (7) verlaufenden Ebene angeordnet sind, **dadurch gekennzeichnet, dass** die Rohrführungen (4, 5) und das Führungsschwert (2) zum Anpassen an unterschiedliche Rohrdurchmesser in radialer Richtung relativ zur Führungsachse (7) hin verstellbar sind, dass jeder Führungsbahn (8, 9) des Führungsschwertes (2) im Bereich der Schweißeinrichtung (3) jeweils zumindest ein Niederhalter (11, 12) zum Niederhalten der in der Führungsbahn (8, 9) geführten Seite des Rohrrohlings (15) zugeordnet ist, und dass die Niederhalter (11, 12) zum Anpassen an die Materialstärke des Rohrrohlings (15) in ihrem Abstand zur zugeordneten Führungsbahn (8, 9) verstellbar sind.

2. Durchlaufschweißmaschine nach Anspruch 1, **dadurch gekennzeichnet, dass** die Schweißeinrichtung (3) eine Längsnahtschweißeinrichtung ist.

3. Durchlaufschweißmaschine nach Anspruch 1 oder 2, **dadurch gekennzeichnet, dass** zumindest ein Niederhalter (11, 12) als ein den Rohrrohling beaufschlagendes und vorzugsweise drehbar gelagertes Niederhalterrad ausgestaltet ist.

4. Durchlaufschweißmaschine nach einem der Ansprüche 1 bis 3, **dadurch gekennzeichnet, dass** die Kohrführungen (4, 5, 6) als Führungsleisten ausgestaltet sind.

5. Durchlaufschweißmaschine nach einem der Ansprüche 1 bis 4, **dadurch gekennzeichnet, dass** die als Rohrführungen (4, 5, 6) vorgesehen Führungsleisten einen den Rohrrohling (15) beaufschlagenden Borstenbesatz (13) aufweisen.

6. Durchlaufschweißmaschine nach einem der Ansprüche 1 bis 5, **dadurch gekennzeichnet, dass** zum Vorschub des Rohrrohlings (15) entlang der Rohrführungen (4, 5) in axialer Richtung verfahrbare Schieber (14) vorgesehen sind.

7. Durchlaufschweißmaschine nach Anspruch 6, **dadurch gekennzeichnet, dass** jeder Schieber (14) vorzugsweise in eine Rohrführung (4) integriert ist.

8. Durchlaufschweißmaschine nach einem der Ansprüche 1 bis 7 **dadurch gekennzeichnet, dass** die Rohrführungen (4, 5) und das Führungsschwert (2) mittels einer Steuereinrichtung verstellbar und an den Durchmesser des jeweils zu verschweißenden Rohres anpassbar sind.

9. Durchlaufschweißmaschine nach einem der Anspruche 1 bis 8 **dadurch gekennzeichnet, dass** der Durchlaufschweißmaschine (1) zum Formen der benötigten Rohrrohlinge (15) aus vorgefertigten Materialzuschnitten zumindest eine Rundbiegemaschine vorgeschaltet ist.

## Claims

1. Cyclic welding machine (1) for welding facing sides of a tubular blank (15) bent from a pre-cut piece of material, having a guide bracing (2) for guiding the sides of the tubular blank (15) that are to be welded together towards a welding apparatus (3), and having tube guides (4, 5) arranged around the periphery of the guide path intended for the tubular blank (15), wherein the guide paths (8, 9) of the guide bracing (2) that are associated with the sides of the tubular blank (15) to be welded and arranged on opposite sides of the guide bracing (2) are arranged at an angle to one another in a plane running through a guide axis (7), **characterised in that** the tube guides (4, 5) and the guide bracing (2) can be moved radially relative to the guide axis (7) in order to adapt to different tube diameters, **in that** at least one blank holder (11, 12) for holding down the side of the tubular blank (15) guided in the guide path (8, 9) is associated with each guide path (8, 9) of the guide bracing (2) in the region of the welding apparatus (3) and **in that** the blank holders (11, 12) are adjustable in their spacing from the associated guide path (8, 9) for adapting to the thickness of the material of the tubular blank (15).

2. Cyclic welding machine according to claim 1, **characterised in that** the welding apparatus (3) is a longitudinal seam welding apparatus.

3. Cyclic welding machine according to claim 1 or 2, **characterised in that** at least one blank holder (11, 12) is configured as a preferably rotatably mounted holding wheel that acts on the tubular blank.

4. Cyclic welding machine according to one of claims 1 to 3, **characterised in that** the tube guides (4, 5, 6) are configured as guide strips.

5. Cyclic welding machine according to one of claims 1 to 4, **characterised in that** the guide strips provided as tube guides (4, 5, 6) are fitted with bristles (13) that act on the tubular blank (15).

6. Cyclic welding machine according to one of claims 1 to 5, **characterised in that** axially movable slides (14) are provided for advancing the tubular blank (15) along the tube guides (4, 5).

7. Cyclic welding machine according to claim 6, **characterised in that** each slide (14) is preferably integrated in a tube guide (4).

8. Cyclic welding machine according to one of claims 1 to 7, **characterised in that** the tube guides (4, 5) and the guide bracing (2) are movable by means of a control device and can be adapted to the diameter of the particular tube that is to be welded.

9. Cyclic welding machine according to one of claims 1 to 8, **characterised in that** at least one machine for bending into rounds is provided upstream of the cyclic welding machine (1) for shaping the required tubular blanks (15) from prefabricated pre-cut pieces of material.

## Revendications

1. Machine (1) de soudage en continu destinée à souder des côtés, tournés l'un vers l'autre, d'une ébauche de tuyau (15) cintrée à partir d'un flan de matériau découpé, comprenant une lame de guidage (2) pour guider, en direction d'un dispositif de soudage (3), les côtés de ladite ébauche de tuyau (15) devant être solidarisés par soudage ; ainsi que des guides tubulaires (4, 5) placés sur le pourtour de la piste de guidage destinée à l'ébauche de tuyau (15), sachant que les pistes de guidage (8, 9) de la lame de guidage (2), affectées aux côtés de l'ébauche de tuyau (15) devant être soudés et disposées sur des côtés opposés de ladite lame de guidage (2), décrivent mutuellement un angle dans un plan passant par un axe de guidage (7), **caractérisée par le fait que** les guides tubulaires (4, 5) et la lame de guidage (2) sont réglables dans le sens radial, en direction et vis-à-vis de l'axe de guidage (7), en vue de l'adaptation à différents diamètres de tuyaux ; **par le fait qu'**au moins un serre-flan (11, 12) est respectivement associé à chaque piste de guidage (8, 9) de la lame de guidage (2), dans la région du dispositif de soudage (3), en vue de plaquer rigidement le côté de l'ébauche de tuyau (15) qui est guidé dans ladite piste de guidage (8, 9) ; et **par le fait que** la distance, comprise entre les serre-flans (11, 12) et la piste de guidage (8, 9) associée, est réglable en vue de l'adaptation à l'épaisseur de matériau de l'ébauche de tuyau (15).

2. Machine de soudage en continu selon la revendication 1, **caractérisée par le fait que** le dispositif de soudage (3) est un dispositif ménageant des soudures longitudinales.

3. Machine de soudage en continu selon la revendication 1 ou 2, **caractérisée par le fait qu'**au moins un serre-flan (11, 12) est réalisé sous la forme d'une roue serre-flan sollicitant l'ébauche de tuyau et montée, de préférence, avec faculté de rotation.

4. Machine de soudage en continu selon l'une des revendications 1 à 3, **caractérisée par le fait que** les guides tubulaires (4, 5, 6) sont réalisés sous la forme de barrettes de guidage.

5. Machine de soudage en continu selon l'une des revendications 1 à 4, **caractérisée par le fait que** les barrettes de guidage, prévues en tant que guides tubulaires (4, 5, 6), présentent une garniture de soies (13) agissant sur l'ébauche de tuyau (15).

6. Machine de soudage en continu selon l'une des revendications 1 à 5, **caractérisée par le fait que** des coulisses (14), mobiles dans le sens axial le long des guides tubulaires (4, 5), sont prévues pour l'avance de l'ébauche de tuyau (15).

7. Machine de soudage en continu selon la revendication 6, **caractérisée par le fait que** chaque coulisse (14) est, de préférence, intégrée dans un guide tubulaire (4).

8. Machine de soudage en continu selon l'une des revendications 1 à 7, **caractérisée par le fait que** les guides tubulaires (4, 5) et la lame de guidage (2) sont réglables au moyen d'un dispositif de commande, et adaptables au diamètre du tuyau devant être respectivement soudé.

9. Machine de soudage en continu selon l'une des revendications 1 à 8, **caractérisée par le fait qu'**au moins une machine de cintrage circulaire est installée en amont de ladite machine (1) de soudage en continu, en vue de la mise en forme des ébauches de tuyaux nécessaires (15) constituées par des flans de matériau découpé préfabriqués.
